# EUROPEAN PATENT APPLICATION

(11) **EP 4 546 481 A1**
(43) Date of publication of application: **30.04.2025**
(21) Application number: 23920324.3
(22) Date of filing: 06.02.2023
(51) Int. Cl.: H01M 10/0525

(54) **PRE-LITHIATED ELECTRODE MATERIAL, PREPARATION METHOD THEREFOR, SECONDARY BATTERY AND ELECTRICAL APPARATUS**

(71) Applicant: Contemporary Amperex Technology (Hong Kong) Limited, Central, Hong Kong (HK)
(72) Inventor: FENG, Fuxiang, Ningde, Fujian 352100 (CN); ZHONG, Wei, Ningde, Fujian 352100 (CN)
(74) Representative: Kraus & Lederer PartGmbB
(86) International application number: PCT/CN2023/074599
(87) International publication number: WO 2024/164109

(57) **Abstract**

This application relates to a prelithiated electrode material and a preparation method thereof, a secondary battery, and an electrical device. A particle diameter of the prelithiated electrode material is 20 nm to 50 µm. The prelithiated electrode material includes a lithiation layer. The lithiation layer includes at least one lithiation sublayer. When a number of the lithiation sublayers is greater than or equal to 2, a content of lithium in the lithiation sublayers decreases layer by layer from a surface to an interior of the prelithiated electrode material. The prelithiated electrode material can reduce internal expansion of particles and alleviate fragmentation of the material while achieving the desired first-cycle Coulombic efficiency of the battery.

## Description

### TECHNICAL FIELD

This application relates to the technical field of lithium batteries, and in particular, to a prelithiated electrode material and a preparation method thereof, a secondary battery, and an electrical device.

### BACKGROUND

In recent years, lithium-ion batteries have been applied more extensively in many fields, including energy storage power systems such as hydro, thermal, wind, and solar power stations, and other fields such as electric tools, electric bicycles, electric motorcycles, and electric vehicles, military equipment, and aerospace. The great development of the lithium-ion batteries gives rise to higher requirements on the energy density, cycle performance, safety performance, and other performance of the batteries.

Formation, also known as activation, is a process of activating positive and negative electrode materials inside a battery through a specified charge-discharge procedure after the battery is assembled, with a view to improving the overall performance of the battery. However, during the formation of the battery, a large amount of lithium source is consumed due to the formation of a solid electrolyte interface (SEI) film and such substances as lithium oxides, thereby resulting in a low first-cycle Coulombic efficiency ("initial efficiency" for short). Therefore, how to improve the first-cycle Coulombic efficiency of the battery has become one of the current research focuses in the industry and academia.

### SUMMARY

This application addresses the above subject-matter. One objective of this application is to provide a prelithiated electrode material to achieve the desired first-cycle Coulombic efficiency of a battery, and at the same time, alleviate material fragmentation caused by excessive volume expansion in the material.

To achieve the above objective, a first aspect of this application provides a prelithiated electrode material. A particle diameter of the prelithiated electrode material is 20 nm to 50 µm. The prelithiated electrode material includes a lithiation layer. The lithiation layer includes at least one lithiation sublayer. When the number of the lithiation sublayers is greater than or equal to 2, a content of lithium in the lithiation sublayers decreases layer by layer from a surface to an interior of the prelithiated electrode material.

The prelithiated electrode material can achieve the desired first-cycle Coulombic efficiency of the battery, and at the same time, alleviate the material fragmentation caused by excessive volume expansion in the material.

A second aspect of this application further provides a method for preparing a prelithiated electrode material, including the following step: performing at least two chemical prelithiation treatments on the electrode material, where a redox potential of a lithiation agent used in each chemical prelithiation treatment decreases stepwise.

Through at least two chemical prelithiation treatments, the method for preparing a prelithiated electrode material enables the prepared prelithiated electrode material to achieve the desired first-cycle Coulombic efficiency of the battery, and at the same time, to alleviate the material fragmentation caused by excessive volume expansion in the material.

A third aspect of this application further provides an electrode plate. The electrode plate includes a current collector and an electrode film layer disposed on at least one surface of the current collector. A material of the electrode film layer includes at least one of the prelithiated electrode material according to the first aspect or a prelithiated electrode material prepared by the preparation method according to the second aspect.

A fourth aspect of this application further provides a secondary battery. The secondary battery includes the electrode plate according to the third aspect of this application.

A fifth aspect of this application further provides an electrical device. The electrical device includes the secondary battery according to the fourth aspect of this application.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

### List of reference numerals:

1. battery pack; 2. upper box; 3. lower box; 4. battery module; 5. secondary battery; 51. housing; 52. electrode assembly; 53. cover plate; 6. electrical device.

### DETAILED DESCRIPTION

The following discloses and describes in detail some embodiments of a prelithiated electrode material and a preparation method thereof, a secondary battery, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

Currently, prelithiation is an effective means to improve the first-cycle Coulombic efficiency of a battery. Prelithiation is a process of introducing an external lithium source into a battery system in a suitable manner and form to alleviate the problem of a decline of the first-cycle Coulombic efficiency caused by the consumption of effective lithium by the electrode. Conventional prelithiation is primarily classed into positive electrode prelithiation and negative electrode prelithiation. Depending on the prelithiation method, prelithiation is classed into the following methods: adding an external lithium source directly, prelithiating with an active additive, electrochemical prelithiation, and chemical prelithiation. Among such methods, the chemical prelithiation has gradually attracted the attention of researchers in recent years due to simple operations and a relatively low requirement on a drying environment. A typical chemical prelithiation process includes: dissolving a complex in an organic solvent, reacting the complex with lithium metal to form a Li-complex-organic solvent composite as a chemical prelithiation reagent (briefly referred to as "lithiation agent"), and letting the target electrode material contact the lithiation agent so that lithium is intercalated into the electrode material to achieve the purpose of prelithiation.

However, for the electrode material, especially for a large-grained electrode material, if the lithium supplementation degree is excessively low, the lithium supplementation effect is poor. If the lithium supplementation degree is excessively high, the volume expansion in the particles will be excessive, and the material is prone to fragmenting.

In view of the above situation, an example of this application provides a prelithiated electrode material. A particle diameter of the prelithiated electrode material is 20 nm to 50 µm. The prelithiated electrode material includes a lithiation layer. The lithiation layer includes at least one lithiation sublayer. When the number of the lithiation sublayers is greater than or equal to 2, the content of lithium in the lithiation sublayers decreases layer by layer from the surface to the interior of the prelithiated electrode material.

In the prelithiated electrode material, appropriate lithiation layers are disposed in the electrode material of a specified particle diameter, thereby achieving the desired first-cycle Coulombic efficiency of the battery, and at the same time, alleviating the material fragmentation caused by excessive volume expansion in the material, and in turn, achieving higher cycle performance.

In addition, the conventional chemical prelithiation method is to lithiate a target material by using a lithiation agent of a redox potential that is lower than that of the target material to be lithiated. To obtain a prelithiated electrode material of a low redox potential (< 0.3 V) (such as a highly lithiated silicon-based material, a carbon-based material, and tin), the redox potential of the lithiation agent needs to be reduced by molecular engineering modification, thereby resulting in excessively high cost of the prelithiation operation. By contrast, the prelithiated electrode material provided in this application may be a plurality of lithiation layers. In this case, the lithium content may increase stepwise from the inner layer to the outer layer of the material, thereby reducing the amount of the low-redox-potential lithiation agent consumed, reducing the cost of lithiation, improving the lithium utilization rate of the prelithiated material, and at the same time, reducing the internal stress of the material and further reducing the probability of rupture of the prelithiated material.

In an example, from the surface to the interior of the prelithiated electrode material, the lithiation layer includes a third lithiation sublayer with a thickness greater than or equal to 0 nm and less than or equal to 30 µm, a second lithiation sublayer with a thickness greater than or equal to 0 nm and less than or equal to 30 µm, and a first lithiation sublayer with a thickness of 10 nm to 50 µm.

The first lithiation sublayer is made of a material containing LiₐM.

The second lithiation sublayer is made of a material containing Li_{b}M.

The third lithiation sublayer is made of a material containing Li_{c}M.

In the formulas above, 0 < a < 5, 0 < b < 5, 0 < c < 5, and, when the thickness of at least one of the second lithiation sublayer or the third lithiation sublayer is greater than 0, a, b, and c satisfy: a < b < c.

M represents one or more of matrix elements in the electrode material.

Understandably, the "matrix elements in the electrode material" refer to elements contained inherently in the electrode material before prelithiation.

Specifically, the value of a may be, but is not limited to, 0.01, 0.05, 0.08, 0.1, 0.2, 0.5, 1, 1.5, 2, 2.2, 2.5, 2.6, 2.8, 3, 3.5, 4, 4.2, 4.4, 4.6, 4.8, 4.9, or a value falling within a range formed by any two thereof. Further, 0 < a ≤ 4.4.

Specifically, the value of b may be, but is not limited to, 0.05, 0.08, 0.1, 0.15, 0.17, 0.2, 0.3, 0.33, 0.4, 0.5, 1, 1.5, 2, 2.2, 2.5, 2.6, 2.8, 3, 3.5, 3.75, 4, 4.2, 4.4, 4.6, 4.8, 4.9, or a value falling within a range formed by any two thereof. Further, 0 < b ≤ 4.4.

Specifically, the value of c may be, but is not limited to, 1, 1.5, 2, 2.2, 2.5, 2.6, 2.8, 3, 3.5, 3.75, 4, 4.2, 4.4, 4.6, 4.8, 4.9, or a value falling within a range formed by any two thereof. Further, 0 < c ≤ 4.4.

Specifically, the particle diameter of the prelithiated electrode material may be, but is not limited to, 20 nm, 25 nm, 30 nm, 35 nm, 50 nm, 100 nm, 300 nm, 500 nm, 600 nm, 610 nm, 620 nm, 630 nm, 640 nm, 650 nm, 660 nm, 670 nm, 680 nm, 690 nm, 700 nm, 800 nm, 1 µm, 3 µm, 5 µm, 6 µm, 7 µm, 10 µm, 20 µm, 30 µm, 40 µm, 45 µm, 50 µm, or a value falling within a range formed by any two thereof. Further, the particle diameter of the prelithiated electrode material is 5 µm to 50 µm. The above design of the prelithiated electrode material is particularly suitable for large-grained electrode materials, and can reduce the probability of rupture of large-grained prelithiated materials.

Specifically, the thickness of the third lithiation sublayer may be, but is not limited to, 0 nm, 5 nm, 10 nm, 15 nm, 20 nm, 50 nm, 100 nm, 500 nm, 1 µm, 5 µm, 10 µm, 20 µm, 30 µm, or a value falling within a range formed by any two thereof.

Specifically, the thickness of the second lithiation sublayer may be, but is not limited to, 0 nm, 5 nm, 10 nm, 15 nm, 20 nm, 50 nm, 100 nm, 350 nm, 400 nm, 500 nm, 650 nm, 1 µm, 2 µm, 5 µm, 10 µm, 20 µm, 25 µm, 30 µm, or a value falling within a range formed by any two thereof.

Specifically, the thickness of the first lithiation sublayer may be, but is not limited to, 0 nm, 5 nm, 10 nm, 15 nm, 20 nm, 30 nm, 50 nm, 100 nm, 250 nm, 300 nm, 350 nm, 400 nm, 500 nm, 550 nm, 600 nm, 650 nm, 1 µm, 2 µm, 4 µm, 5 µm, 10 µm, 15 µm, 20 µm, 25 µm, 30 µm, 35 µm, 40 µm, 45 µm, 50 µm, or a value falling within a range formed by any two thereof.

In an example, M includes one or more of carbon, silicon, phosphorus, tin, magnesium, silver, zinc, sulfur, or germanium.

Another example of this application provides a method for preparing a prelithiated electrode material, including the following step: performing at least two chemical prelithiation treatments on the electrode material, where a redox potential of a lithiation agent used in each chemical prelithiation treatment decreases stepwise.

In the above preparation method, lithiation agents with gradually decreasing redox potentials are used to prelithiate the electrode material hierarchically. On the one hand, the hierarchical prelithiation maximally accomplishes the desired prelithiation degree and achieves the desired first-cycle Coulombic efficiency. On the other hand, the hierarchical prelithiation can reduce the stress inside the electrode material particles during the reaction, thereby reducing expansion and suppressing material fragmentation.

In addition, research shows that in practical applications of the electrode material, the lithium inside the electrode material is usually difficult to diffuse, thereby reducing the effect of improving the first-cycle Coulombic efficiency. The conventional lithium supplementing method is overall lithium supplementation, thereby not only making the inside of the particles prone to expansion and fragmenting, but also leading to a decrease in the utilization rate of lithium in the prelithiated material. In view of the above situation, this application prepares a prelithiated electrode material by means of hierarchical prelithiation. When a plurality of lithiation layers are provided, the lithium content increases stepwise from the inner layer to the outer layer. In this way, the amount of the low-redox-potential lithiation agent consumed is reduced while achieving a relatively high first-cycle Coulombic efficiency of the electrode material, thereby reducing the lithiation cost, improving the lithium utilization rate, and further reducing the probability of rupture.

In an example, the preparation method includes at least two of the following steps (1) to (3) successively:
(1) Mixing the electrode material with a first lithiation agent to undergo a first reaction to make a first prelithiated electrode material;
(2) Mixing the electrode material or the first prelithiated electrode material made in step (1) with a second lithiation agent to undergo a second reaction to make a second prelithiated electrode material; and
(3) Mixing the first prelithiated electrode material made in step (1) or the second prelithiated electrode material made in step (2) with a third lithiation agent to undergo a third reaction to make a third prelithiated electrode material.

In an example, in step (1), the redox potential of the first lithiation agent is 0.4 V to 2 V. Specifically, the redox potential of the first lithiation agent may be, but is not limited to, 0.4 V, 0.6 V, 0.8 V, 1 V, 1.2 V, 1.4 V, 1.6 V, 2 V, or a value falling within a range formed by any two thereof.

In an example, the first lithiation agent is a complex solution formed by lithium ions, a first complex, and a first solvent. Without limitation, the first complex includes one or more of butyl (C₄H₁₀⁻), benzophenone, phenanthrene, anthracene, pyrene, or tetracene. Without limitation, the first solvent includes one or more of an ether solvent, a furan solvent, a pyran solvent, an ester solvent, a benzene solvent, or a fluoride of one of the preceding solvents, for example, includes benzene, ethylene glycol dimethyl ether, 2-methyltetrahydrofuran, pyran, and fluoroethylene carbonate.

In an example, in step (1), the first prelithiated electrode material includes a first lithiation layer, and the first lithiation layer includes a single layer and is made of a material containing LiₓM, where 0 < x < 3, and M represents one or more of matrix elements in the electrode material.

In an example, in step (2), the redox potential of the second lithiation agent is less than 0.4 V and greater than or equal to 0.2 V. Specifically, the redox potential of the second lithiation agent may be, but is not limited to, 0.2 V, 0.25 V, 0.3 V, 0.35 V, 0.37 V, 0.39 V, or a value falling within a range formed by any two thereof.

In an example, the second lithiation agent is a complex solution formed by lithium ions, a second complex, and a second solvent. Without limitation, the second complex includes one or more of quinoline, isoquinoline, naphthalene, 1-methylnaphthalene, 2-methylnaphthalene, 1-ethylnaphthalene, 2-ethylnaphthalene, 1-naphthyl methyl ether, 2-naphthyl methyl ether, 1-naphthonitrile; 2-naphthonitrile, 1-acetonaphthone, 2-acetonaphthone, N,N-dimethyl-1-naphthylamine, N,N-dimethyl-2-naphthylamine, biphenyl, 3,3-dimethylbiphenyl, or 3,3,4,4-dimethylbiphenyl. Without limitation, the second solvent includes one or more of an ether solvent, a furan solvent, a pyran solvent, an ester solvent, a benzene solvent, or a fluoride of one of the preceding solvents, for example, includes benzene, ethylene glycol dimethyl ether, 2-methyltetrahydrofuran, pyran, and fluoroethylene carbonate.

In an example, in step (2), the second prelithiated electrode material includes a second lithiation layer.

In an example, the second lithiation layer includes a single layer and is made of a material containing Li_{y}M, where 0 < y < 5, and further, 0 < y ≤ 4.4; and M represents one or more of matrix elements in the electrode material. Understandably, the second lithiation layer may be formed by step (2) alone, or may be a second lithiation layer exhibited as one layer on the whole and formed by overlaying the lithiation layer formed in step (1) with another layer through the second reaction after step (1) is performed.

In an example, along a direction from the surface to the interior of the prelithiated electrode material, the second lithiation layer includes an (A-2)^{th} lithiation sublayer and an (A-1)^{th} lithiation sublayer. The (A-2)^{th} lithiation sublayer is made of a material containing Li_{y}M, and the (A-1)^{th} lithiation sublayer is made of a material containing LiₓM, where 0 < x < 3, 0 < x < y < 5, and further, 0 < x < y ≤ 4.4; and M represents one or more of the matrix elements in the electrode material; and optionally, a thickness of the (A-2)^{th} lithiation sublayer is 1 nm to 30 µm, and a thickness of the (A-1)^{th} lithiation sublayer is 10 nm to 30 µm. Understandably, the second lithiation layer is a two-layer structure ([LiₓM]@[Li_{y}M], x < y < 5) formed by partially overlaying the lithiation layer formed in step (1) with another layer through the second reaction after step (1) is performed.

In an example, in step (3), the redox potential of the third lithiation agent is less than 0.2 V. Specifically, the redox potential of the third lithiation agent may be, but is not limited to, 0.05 V, 0.07 V, 0.1 V, 0.12 V, 0.13 V, 0.14 V, 0.15 V, 0.17 V, 0.19 V, or a value falling within a range formed by any two thereof.

In an example, the third lithiation agent is a complex solution formed by lithium ions, a third complex, and a third solvent. Without limitation, the third complex includes one or more of liquid ammonia, 2-methylbiphenyl, indene, fluorene, or 9,9-dimethylfluorene. Without limitation, the third solvent includes one or more of an ether solvent, a furan solvent, a pyran solvent, an ester solvent, a benzene solvent, or a fluoride of one of the preceding solvents, for example, includes benzene, ethylene glycol dimethyl ether, 2-methyltetrahydrofuran, pyran, and fluoroethylene carbonate.

In an example, in step (3), the third prelithiated electrode material includes a third lithiation layer.

In an example, the third lithiation layer includes a single layer and is made of a material containing Li_{z}M, where 0 < z < 5, and further, 0 < z ≤ 4.4; and M represents one or more of matrix elements in the electrode material. Understandably, the third lithiation layer is a third lithiation layer exhibited as one layer on the whole and formed by overlaying the lithiation layer formed in step (1) and/or step (2) with another layer through the third reaction after step (1) and/or step (2) is performed.

In an example, along a direction from the surface to the interior of the prelithiated electrode material, the third lithiation layer includes a (B-2)^{th} lithiation sublayer and a (B-1)^{th} lithiation sublayer. The (B-2)^{th} lithiation sublayer is made of a material containing Li_{z}M, and the (B-1)^{th} lithiation sublayer is made of a material containing LiₓM, where 0 < x < 3, 0 < x < z < 5, and further, 0 < x < z ≤ 4.4; and M represents one or more of the matrix elements in the electrode material. Understandably, the third lithiation layer may be a third lithiation layer exhibited as two layers on the whole ([LiₓM]@[Li_{z}M], x < z < 5) and formed by partially overlaying the lithiation layer formed in step (1) with another layer through the third reaction after step (1) is performed; or, the third lithiation layer may be a third lithiation layer exhibited as two layers on the whole ([LiₓM]@[Li_{z}M], x < z < 5) and formed by overlaying the lithiation layer formed in step (2) with another layer through the third reaction after step (1) and step (2) are performed.

Without limitation, the thickness of the (B-2)^{th} lithiation sublayer is 1 nm to 30 µm, and the thickness of the (B-1)^{th} lithiation sublayer is 10 nm to 30 µm.

In an example, along the direction from the surface to the interior of the prelithiated electrode material, the third lithiation layer includes a (C-2)^{th} lithiation sublayer and a (C-1)^{th} lithiation sublayer. The (C-2)^{th} lithiation sublayer is made of a material containing Li_{z}M, and the (C-1)^{th} lithiation sublayer is made of a material containing Li_{y}M, where 0 < y < 5, 0 < y < z < 5, and further, 0 < y ≤ 4.4, 0 < y < z ≤ 4.4; and M represents one or more of the matrix elements in the electrode material. Understandably, the third lithiation layer is a third lithiation layer exhibited as two layers on the whole ([Li_{y}M]@[Li_{z}M], y < z < 5) and formed by partially overlaying the lithiation layer formed in step (2) with another layer through the third reaction after step (2) is performed.

Without limitation, the thickness of the (C-2)^{th} lithiation sublayer is 1 nm to 30 µm, and the thickness of the (C-1)^{th} lithiation sublayer is 10 nm to 30 µm.

In an example, along the direction from the surface to the interior of the prelithiated electrode material, the third lithiation layer includes a (D-3)^{th} lithiation sublayer, a (D-2)^{th} lithiation sublayer, and a (D-1)^{th} lithiation sublayer. The (D-3)^{th} lithiation sublayer is made of a material containing Li_{z}M, the (D-2)^{th} lithiation sublayer is made of a material containing Li_{y}M, and the (D-1)^{th} lithiation sublayer is made of a material containing LiₓM, where 0 < x < 3, 0 < y < 5, 0 < x < y < z < 5, and further, 0 < y ≤ 4.4, 0 < x < y < z ≤ 4.4; and M represents one or more of the matrix elements in the electrode material. Understandably, the third lithiation layer is a third lithiation layer exhibited as three layers on the whole ([LiₓM]@[Li_{y}M]@[Li_{z}M], x < y < z < 5) and formed by partially overlaying the lithiation layer formed in step (1) with another layer through the second reaction after step (1) is performed, and then by partially overlaying the lithiation layer formed in step (2) with another layer through the third reaction.

Without limitation, the thickness of the (D-3)^{th} lithiation sublayer is 1 nm to 30 µm, the thickness of the (D-2)^{th} lithiation sublayer is 1 nm to 30 µm, and the thickness of the (D-1)^{th} lithiation sublayer is 10 nm to 30 µm.

In an example, M includes one or more of carbon, silicon, phosphorus, tin, magnesium, silver, zinc, sulfur, or germanium.

In an example, the electrode material includes one or more of elemental sulfur, elemental silicon, silicon suboxide (SiOₓ₁, 0 < x1 ≤ 1.5), elemental phosphorus, elemental tin, tin suboxide (SnOₓ₂, 0 < x2 ≤ 1.5), elemental magnesium, elemental silver, elemental zinc, elemental germanium, germanium suboxide (GeOₓ₃, 0 < x3 ≤ 1.5), graphite, graphene, hard carbon, soft carbon, carbon nanotubes, or carbon nanofibers.

In an example, the particle diameter of the electrode material is 20 nm to 50 µm. Specifically, the particle diameter of the prelithiated electrode material may be, but is not limited to, 20 nm, 50 nm, 100 nm, 300 nm, 500 nm, 700 nm, 1 µm, 3 µm, 5 µm, 7 µm, 10 µm, 20 µm, 30 µm, 40 µm, 50 µm, or a value falling within a range formed by any two thereof. Further, the particle diameter of the electrode material is 5 µm to 50 µm.

In an example, in step (1), the temperature of the first reaction is room temperature, and the time of the first reaction is 0.1 h to 6 h.

In an example, in step (2), the temperature of the second reaction is room temperature, and the time of the second reaction is 0.1 h to 6 h.

In an example, in step (3), the temperature of the third reaction is room temperature, and the time of the third reaction is 0.1 h to 6 h.

Another example of this application provides an electrode plate. The electrode plate includes a current collector and an electrode film layer disposed on at least one surface of the current collector. The material of the electrode film layer includes at least one of the prelithiated electrode material disclosed above or a prelithiated electrode material prepared by the preparation method disclosed above.

Another example of this application further provides a secondary battery. The secondary battery includes the electrode plate disclosed above.

Another example of this application further provides an electrical device. The electrical device includes the secondary battery disclosed above.

Further, the following describes a secondary battery, a battery module, a battery pack, and an electrical device according to this application.

In an embodiment of this application, a secondary battery is provided.

Generally, the secondary battery includes a positive electrode plate, a negative electrode plate, an electrolyte, and a separator. In a charge-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### Positive electrode plate

The positive electrode plate includes a positive current collector and a positive electrode film layer that overlays at least one surface of the positive current collector. The positive electrode film layer includes a positive active material.

As an example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by disposing a metal material on a polymer material substrate. The metal material includes, but is not limited to, aluminum, aluminum alloy, nickel, nickel alloy, titanium, titanium alloy, silver, silver alloy, and the like. The polymer material substrate may be a substrate of polypropylene (PP), polyethylene terephthalate (PET), polybutylene terephthalate (PBT), polystyrene (PS), polyethylene (PE), or the like.

In some embodiments, the positive active material may be a positive active material well-known in the art for use in a battery. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon. A mass percent of the positive active material in the positive electrode film layer is 80 wt% to 100 wt% based on the total mass of the positive electrode film layer.

In some embodiments, the positive electrode film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin. A mass percent of the binder in the positive electrode film layer is 0 wt% to 20 wt% based on the total mass of the positive electrode film layer.

In some embodiments, the positive electrode film layer further optionally includes a conductive agent. As an example, the conductive agent may include at least one of superconductive carbon, acetylene black, carbon black, Ketjen black, carbon dots, carbon nanotubes, graphene, or carbon nanofibers. A mass percent of the conductive agent in the positive electrode film layer is 0 wt% to 20 wt% based on the total mass of the positive electrode film layer.

In some embodiments, the positive electrode plate may be prepared by the following method: dispersing the constituents of the positive electrode plate such as the positive active material, the conductive agent, the binder, and any other constituents into a solvent (such as N-methyl-pyrrolidone) to form a positive electrode slurry in which the solid content is 40 wt% to 80 wt%; adjusting the viscosity of the slurry at room temperature to 5000 to 25000 mPa·s, and coating a surface of the positive current collector with the positive electrode slurry; oven-drying the slurry, cold-pressing the current collector with a cold-pressing machine to form a positive electrode plate, where a coating areal density of the positive electrode powder per unit area is 150 to 350 mg/m², and the compaction density of the positive electrode plate is 3.0 to 3.6 g/cm³, and optionally 3.3 to 3.5 g/cm³. The compaction density is calculated by the following formula: compaction density = coating areal density/(thickness of pressed electrode plate - thickness of current collector).

### Negative electrode plate

The negative electrode plate includes a negative current collector and a negative electrode film layer disposed on at least one surface of the negative current collector. The negative electrode film layer includes a negative active material.

As an example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be formed by disposing a metal material on a polymer material substrate. The metal material includes, but is not limited to, copper, copper alloy, nickel, nickel alloy, titanium, titanium alloy, silver, silver alloy, and the like. The polymer material substrate includes, but is not limited to, polypropylene (PP), polyethylene terephthalate (PET), polybutylene terephthalate (PBT), polystyrene (PS), polyethylene (PE), and the like.

In some embodiments, the negative active material may be a negative active material well-known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination. The mass percent of the negative active material in the negative electrode film layer is 70 wt% to 100 wt% based on the total mass of the negative electrode film layer.

In some embodiments, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS). The mass percent of the binder in the negative electrode film layer is 0 wt% to 30 wt% based on the total mass of the negative electrode film layer.

In some embodiments, the negative electrode film layer further optionally includes a conductive agent. The conductive agent may be at least one selected from superconductive carbon, acetylene black, carbon black, Ketjen black, carbon dots, carbon nanotubes, graphene, or carbon nanofibers. The mass percent of the conductive agent in the negative electrode film layer is 0 wt% to 20 wt% based on the total mass of the negative electrode film layer.

In some embodiments, the negative electrode film layer further optionally includes other agents, such as a thickener (for example, sodium carboxymethyl cellulose (CMC-Na)). The mass percent of other agents in the negative electrode film layer is 0 wt% to 15 wt% based on the total mass of the negative electrode film layer.

In some embodiments, the negative electrode plate may be prepared by the following method: dispersing the constituents of the negative electrode plate such as the negative active material, the conductive agent, and the binder and any other constituents into a solvent (such as deionized water) to form a negative electrode slurry in which the solid content is 30 wt% to 70 wt%, adjusting the viscosity of the slurry at room temperature to 2000 to 10000 mPa·s; coating a negative current collector with the resulting negative electrode slurry, and performing steps such as drying and cold pressing such as calendering to obtain a negative electrode plate. The coating areal density of the negative electrode powder per unit area is 75 to 220 mg/m², and the compaction density of the negative electrode plate is 1.2 to 2.0 g/m³.

### Electrolyte

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes an electrolyte salt and a solvent.

In some embodiments, the electrolyte salt may be one or more selected from lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro(bisoxalato)phosphate (LiDFOP), or lithium tetrafluoro(oxalato)phosphate (LiTFOP). The concentration of the electrolyte salt is typically 0.5 to 5 mol/L.

In some embodiments, the solvent may be one or more selected from fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), or (ethylsulfonyl)ethane (ESE).

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

### Separator

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the thickness of the separator is 6 to 40 µm, and optionally 12 to 20 µm.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

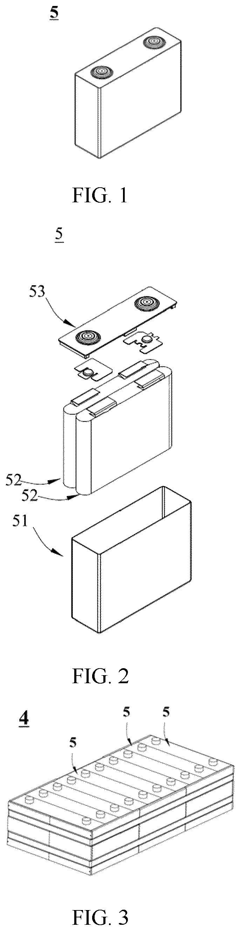

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. The housing 51 is provided with an opening that communicates to the accommodation cavity. The cover plate 53 can be placed over the opening to seal the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, secondary batteries may be assembled to form a battery module. The battery module may include one or more secondary batteries, and the specific number of secondary batteries in a battery module may be selected by a person skilled in the art depending on practical applications and capacity of the battery module.

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

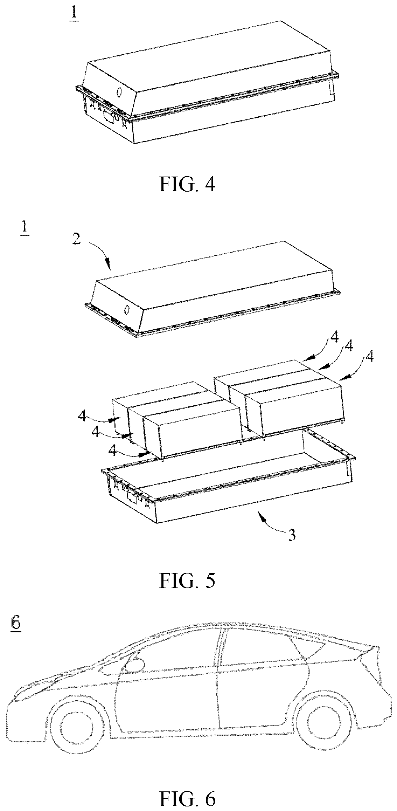

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical devices may include, but are not limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

To clarify the technical problems to be solved by this application, technical solutions, and beneficial effects of this application more clearly, the following describes this application in further detail with reference to embodiments and drawings. Evidently, the described embodiments are merely a part of but not all of the embodiments of this application. The following description of at least one exemplary embodiment is merely illustrative, and is in no way intended as a limitation on this application or the use thereof. All other embodiments derived by a person of ordinary skill in the art based on the embodiments of this application without making any creative efforts still fall within the protection scope of this application.

Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### I. Preparation embodiments

### Preparing a prelithiated electrode material

### Preparation embodiment 1

(1) Dissolving 0.5 mol of benzophenone in 1 L of ethylene glycol dimethyl ether, adding 0.5 mol of lithium sheet, and stirring at 25 °C for 4 h to obtain lithium-benzophenone-ethylene glycol dimethyl ether (first lithiation agent), where the concentration of the first lithiation agent is 0.5 mol/L, and the redox potential of the first lithiation agent is 1.0 V).
(2) Dissolving 0.5 mol of naphthalene in 1 L of ethylene glycol dimethyl ether, adding 0.5 mol of lithium sheet, and stirring at room temperature for 4 h to obtain lithium-naphthalene-ethylene glycol dimethyl ether (second lithiation agent), where the concentration of the second lithiation agent is 0.5 mol/L, and the redox potential of the second lithiation agent is 0.37 V).
(3) Dissolving 0.5 mol of 2-methylbiphenyl in 1 L of ethylene glycol dimethyl ether, adding 0.5 mol of lithium sheet, and stirring at room temperature for 4 h to obtain lithium-2-methylbiphenyl-ethylene glycol dimethyl ether (third lithiation agent), where the concentration of the third lithiation agent is 0.5 mol/L, and the redox potential of the third lithiation agent is 0.13 V).
(4) reacting elemental tin of a particle diameter 30 µm with the first lithiation agent added in an amount exceeding 1 times the molar amount of the elemental tin for 6 hours to prepare a LiSn alloy layer.
(5) reacting the LiSn alloy obtained in step (4) with the second lithiation agent added in an amount exceeding 1 times the molar amount of the elemental tin for 6 hours to prepare a Li₁₃Sn₅ alloy layer.
(6) reacting the Li₁₃Sn₅ alloy obtained in step (5) with the third lithiation agent added in an amount exceeding 1 times the molar amount of the alloy for 6 hours to prepare a single-layer Li₂₂Sn₅ alloy layer, drying the alloy layer, and storing the alloy layer in a nitrogen atmosphere for future use.

The preparation methods of the prelithiated electrode materials in Embodiments 2 to 10, Comparative Embodiment 1, and Reference Embodiments 1 to 2 are similar to the preparation method in Embodiment 1 except the reaction time, the particle diameter type of the electrode material, the reaction steps, the process method, and the like, as detailed in Table 1.

**Table 1**

| Embodiment | Electrode material | Lithiation agent | Reaction time (h) | Resultant material |
|---|---|---|---|---|
| 1 | Elemental Sn with a particle size of 30 µm | Naphthyl methyl ketone/naphthalene/2-methyl biphenyl | 6/6/6 | Single layer, 45 µm Li₂₂Sn₅ |
| 2 | Elemental Sn with a particle size of 30 µm | Phenanthrene/naphthalene/2-methyl biphenyl | 3/3/2 | Two layers, 15 µm LiSn@30 µm Li₂₂Sn₅ |
| 3 | Elemental Sn with a particle size of 30 µm | Phenanthrene/naphthalene/2-methyl biphenyl | 3/2/1 | Three layers, 25 µm LiSn@10 µm Li₁₃Sn₅@5 µm Li₂₂Sn₅ |
| 4 | Elemental Sn with a particle size of 500 nm | Phenanthrene/liquid ammonia | *0.5*/*0.1* | Two layers, 10 nm LiSn@650 nm Li₂₂Sn₅ |
| 5 | Elemental Sn with a particle size of 500 nm | Phenanthrene/indene | *0.5*/*0.1* | Two layers, 300 nm LiSn@350 nm Li₁₃Sn₅ |
| 6 | Elemental Sn with a particle size of 500 nm | Biphenyl/9,9-dimethyl fluorene | *0.5*/*0.1* | Two layers, 300 nm Li₁₃Sn₅@400 nm Li₂₂Sn₅ |
| 7 | Elemental Si with a particle size of 500 nm | Phenanthrene/naphthalene/2-methyl biphenyl | *0.5*/*0.1*/*0.1* | Three layers, 600 nm LiSi@10 nm Li₁₅Si₄@10 nm Li₂₂Si₅ |
| 8 | Elemental Sn with a particle size of 20 nm | Phenanthrene/naphthalene/2-methyl biphenyl | 0.1/0.1/0.1 | Single layer, 30 nm Li₂₂Sn₅ |
| 9 | SiO with a particle size of 5000 nm | Phenanthrene/naphthalene/2-methyl biphenyl | 0.1/0.1/0.1 | Two layers, 4000 nm LiSi@2000 nm Li₂Si₂O₄ |
| 10 | Hard carbon with a particle size of 40 µm | Naphthonitrile/2-methyl biphenyl | 6/1 | Two layers, 25 µm LiC₁₄@25 µm LiC₁₂ |
| Comparative Embodiment 1 | Sn foil, 50 µm thick | 50 µm-diameter LiSn powder obtained by grinding LiSn alloy prepared by pressing 106 µm-thick Li foil and 30 µm-thick Sn foil | - | Li/Sn atomic ratio = 22/5, needing to be ground into powder after pressing, with the structure nonuniform |
| Reference Embodiment 1 | Elemental Sn with a particle size of 20 nm | 2-methyl biphenyl | 0.1 | Single layer, 30 nm Li₂₂Sn₅ |
| Reference Embodiment 2 | Elemental Sn with a particle size of 30 µm | 2-methyl biphenyl | 6 | Single layer, 45 µm Li₂₂Sn₅ |

| | | | | |
|---|---|---|---|---|
| Note: The symbol "/" in Table 1 indicates the corresponding reagents and times in different steps. For example, "first/third" and "3/1" in Embodiment 4 indicate that only the first lithiation agent and the third lithiation agent are used for the reaction (that is, only steps (4) and (6) are performed), and the reaction times are 3 h and 1 h, respectively. | | | | |

### II. Application embodiments

### Embodiment 1

### 1) Preparing a positive electrode plate

Dispersing the LiFePO₄ positive electrode, Super P, and the binder PVDF at a mass ratio of 84: 8: 8 in an NMP solvent, and stirring well to obtain a positive electrode slurry; and applying the positive electrode slurry evenly onto a positive current collector aluminum foil, and oven-drying and cold-pressing the foil to obtain a positive electrode plate.

### 2) Preparing a negative electrode plate

Mixing the graphite, Ketjen carbon, a binder (50 wt% AST-9005 and 50 wt% LPIMAM37B) and the prelithiated electrode material prepared in the embodiment, the comparative embodiment or the reference embodiment at a mass ratio of 80: 1: 9: 10, and adding NMP, and stirring the mixture with a vacuum mixer to obtain a negative electrode slurry. Applying the negative electrode slurry evenly onto a carbon-coated Cu foil, and performing oven-drying and cold-pressing to obtain a negative electrode plate.

### 3) Separator

Using a 12 µm-thick polyethylene film as a separator.

### 4) Preparing an electrolyte solution

Selecting an organic solvent that is a mixed solution containing vinylene carbonate (EC), ethyl methyl carbonate (EMC), and diethyl carbonate (DEC), where a volume ratio between the EC, the EMC and the DEC is 20:20:60. Dissolving, in an argon-atmosphere glovebox with a water content of less than 10 ppm, a LiPF⁶ lithium salt in the organic solvent, and mixing the lithium salt homogeneously to obtain an electrolyte solution, where the concentration of the lithium salt is 1 mol/L.

### 5) Preparing a battery

Stacking the positive electrode plate, the separator, and the negative electrode plate neatly so that the separator is located between the positive electrode plate and the negative electrode plate for a separation purpose; winding the stacked materials into a rectangular bare cell, putting the bare cell into an aluminum laminated film package, drying the package under 80°C to remove moisture, injecting 10 grams of corresponding nonaqueous electrolyte solution, performing sealing, and performing the steps such as standing, hot/cold calendering, formation, reshaping, capacity grading to obtain a full cell.

### III. Battery performance test

The performance of the full-cell is tested by using a high-precision battery test system according to the following procedure: (1) leaving the cell to stand for 6 hours; (2) charging the cell at a constant current of 0.1C until the voltage reaches 3.65 V, and then charging the cell at a constant voltage until the current drops to 0.05C; (3) leaving the cell to stand for 5 minutes; (4) discharging the cell at a constant current of 0.2C until the voltage drops to 2 V, and then discharging the cell at a constant voltage until the current drops to 0.05C; (5) leaving the cell to stand for 5 minutes; (6) charging the cell at a constant current of 0.2C until the voltage reaches 3.65 V, and then charging the cell at a constant voltage until the current drops to 0.05C; (7) leaving the cell to stand for 5 minutes; (8) discharging the cell at a constant current of 0.5C until the voltage drops to 2 V; (9) leaving the cell to stand for 5 minutes; (10) repeating steps (6) to (9) for 10 cycles; (11) charging the cell at a constant current of 0.1C until the voltage reaches 3.65 V, and then charging the cell at a constant voltage until the current drops to 0.05C; (12) leaving the cell to stand for 5 minutes; (13) discharging the cell at a constant current of 0.2C until the voltage drops to 2 V; (14) leaving the cell to stand for 5 minutes; (15) repeating steps (6) to (13) for 10 cycles; and (16) ending the test.

The test results are shown in Table 2.

**Table 2**

| Embodiment | First-cycle Coulombic efficiency of full-cell (%) | 100^{th}-cycle capacity retention rate of full-cell (%) |
|---|---|---|
| Embodiment 1 | 111.4 | 92.8 |
| Embodiment 2 | 108.6 | 93.5 |
| Embodiment 3 | 105.6 | 94.3 |
| Embodiment 4 | 107.3 | 93.8 |
| Embodiment 5 | 102.7 | 95.6 |
| Embodiment 6 | 109.6 | 93.8 |
| Embodiment 7 | 115.1 | 94.3 |
| Embodiment 8 | 113.9 | 95.2 |
| Embodiment 9 | 96.2 | 99.1 |
| Embodiment 10 | 95.7 | 98.6 |
| Comparative Embodiment 1 | 90.5 | 92.1 |
| Reference Embodiment 1 | 112.6 | 94.5 |
| Reference Embodiment 2 | 111.0 | 92.2 |

As can be seen from Embodiments 1 to 10 versus Comparative Embodiment 1, the prelithiated electrode material of this application can effectively improve the first-cycle Coulombic efficiency of the battery. Further, as can be seen from Embodiment 8 versus Reference Embodiment 1, and from Embodiment 1 versus Reference Embodiment 2, the prelithiated electrode material of this application can achieve a first-cycle Coulombic efficiency equivalent to or even higher than that achieved by using a low-redox-potential lithium reagent alone. In addition, because a smaller amount of the low-redox-potential lithium reagent is consumed, the cost is reduced effectively.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A prelithiated electrode material, wherein a particle diameter of the prelithiated electrode material is 20 nm to 50 µm, the prelithiated electrode material comprises a lithiation layer, the lithiation layer comprises at least one lithiation sublayer, and, when a number of the lithiation sublayers is greater than or equal to 2, a content of lithium in the lithiation sublayers decreases layer by layer from a surface to an interior of the prelithiated electrode material.

2. The prelithiated electrode material according to claim 1, **characterized in that**, from the surface to the interior of the prelithiated electrode material, the lithiation layer comprises a third lithiation sublayer with a thickness greater than or equal to 0 nm and less than or equal to 30 µm, a second lithiation sublayer with a thickness greater than or equal to 0 nm and less than or equal to 30 µm, and a first lithiation sublayer with a thickness of 10 nm to 50 µm;
the first lithiation sublayer is made of a material containing LiₐM;
the second lithiation sublayer is made of a material containing Li_{b}M;
the third lithiation sublayer is made of a material containing Li_{c}M;
in the formulas above, 0 < a < 5, 0 < b < 5, 0 < c < 5, and, when the thickness of at least one of the second lithiation sublayer or the third lithiation sublayer is greater than 0, a, b, and c satisfy: a < b < c; and
M represents one or more of matrix elements in the electrode material.

3. The prelithiated electrode material according to claim 2, **characterized in that** M comprises one or more of carbon, silicon, phosphorus, tin, magnesium, silver, zinc, sulfur, or germanium.

4. The prelithiated electrode material according to any one of claims 1 to 3, **characterized in that** the particle diameter of the prelithiated electrode material is 5 µm to 50 µm.

5. A method for preparing a prelithiated electrode material, comprising the following step:
performing at least two chemical prelithiation treatments on the electrode material, wherein a redox potential of a lithiation agent used in each chemical prelithiation treatment decreases stepwise.

6. The method for preparing a prelithiated electrode material according to claim 5, **characterized in that** the preparation method comprises at least two of the following steps (1) to (3) successively:
(1) mixing the electrode material with a first lithiation agent to undergo a first reaction to make a first prelithiated electrode material;
(2) mixing the electrode material or the first prelithiated electrode material made in step (1) with a second lithiation agent to undergo a second reaction to make a second prelithiated electrode material; or
(3) mixing the first prelithiated electrode material made in step (1) or the second prelithiated electrode material made in step (2) with a third lithiation agent to undergo a third reaction to make a third prelithiated electrode material.

7. The method for preparing a prelithiated electrode material according to claim 6, **characterized in that**, in step (1), the redox potential of the first lithiation agent is 0.4 V to 1 V; optionally, the first lithiation agent is a complex solution formed by lithium ions, a first complex, and a first solvent; further optionally, the first complex comprises one or more of butyl, benzophenone, phenanthrene, anthracene, pyrene, or tetracene; and further optionally, the first solvent comprises one or more of an ether solvent, a furan solvent, a pyran solvent, an ester solvent, a benzene solvent, or a fluoride of one of the preceding solvents.

8. The method for preparing a prelithiated electrode material according to claim 6 or 7, **characterized in that**, in step (1), the first prelithiated electrode material comprises a first lithiation layer, and the first lithiation layer comprises a single layer and is made of a material containing LiₓM, wherein 0 < x < 3, and M represents one or more of matrix elements in the electrode material.

9. The method for preparing a prelithiated electrode material according to claim 6, **characterized in that**, in step (2), the redox potential of the second lithiation agent is less than 0.4 V and greater than or equal to 0.2 V; optionally, the second lithiation agent is a complex solution formed by lithium ions, a second complex, and a second solvent; further optionally, the second complex comprises one or more of quinoline, isoquinoline, naphthalene, 1-methylnaphthalene, 2-methylnaphthalene, 1-ethylnaphthalene, 2-ethylnaphthalene, 1-naphthyl methyl ether, 2-naphthyl methyl ether, 1-naphthonitrile; 2-naphthonitrile, 1-acetonaphthone, 2-acetonaphthone, N,N-dimethyl-1-naphthylamine, N,N-dimethyl-2-naphthylamine, biphenyl, 3,3-dimethylbiphenyl, or 3,3,4,4-dimethylbiphenyl; and further optionally, the second solvent comprises one or more of an ether solvent, a furan solvent, a pyran solvent, an ester solvent, a benzene solvent, or a fluoride of one of the preceding solvents.

10. The method for preparing a prelithiated electrode material according to claim 6 or 9, **characterized in that**, in step (2), the second prelithiated electrode material comprises a second lithiation layer, and the second lithiation layer satisfies one of the following characteristics:
(2-1) the second lithiation layer comprises a single layer and is made of a material containing Li_{y}M, wherein 0 < y < 5, and M represents one or more of matrix elements in the electrode material; and
(2-2) along a direction from a surface to an interior of the prelithiated electrode material, the second lithiation layer comprises an (A-2)^{th} lithiation sublayer and an (A-1)^{th} lithiation sublayer, the (A-2)^{th} lithiation sublayer is made of a material containing Li_{y}M, and the (A-1)^{th} lithiation sublayer is made of a material containing LiₓM, wherein 0 < x < 3, 0 < x < y < 5, and M represents one or more of the matrix elements in the electrode material; and optionally, a thickness of the (A-2)^{th} lithiation sublayer is 1 nm to 30 µm, and a thickness of the (A-1)^{th} lithiation sublayer is 10 nm to 30 µm.

11. The method for preparing a prelithiated electrode material according to claim 6, **characterized in that**, in step (3), the redox potential of the third lithiation agent is less than 0.2 V; optionally, the third lithiation agent is a complex solution formed by lithium ions, a third complex, and a third solvent; further optionally, the third complex comprises one or more of liquid ammonia, 2-methylbiphenyl, indene, fluorene, or 9,9-dimethylfluorene; and further optionally, the third solvent comprises one or more of an ether solvent, a furan solvent, a pyran solvent, an ester solvent, a benzene solvent, or a fluoride of one of the preceding solvents.

12. The method for preparing a prelithiated electrode material according to claim 6 or 11, **characterized in that**, in step (3), the third prelithiated electrode material comprises a third lithiation layer, and the third lithiation layer satisfies one of the following characteristics:
(3-1) the third lithiation layer comprises a single layer and is made of a material containing Li_{z}M, wherein 0 < z < 5, and M represents one or more of matrix elements in the electrode material;
(3-2) along a direction from a surface to an interior of the prelithiated electrode material, the third lithiation layer comprises a (B-2)^{th} lithiation sublayer and a (B-1)^{th} lithiation sublayer, the (B-2)^{th} lithiation sublayer is made of a material containing Li_{z}M, and the (B-1)^{th} lithiation sublayer is made of a material containing LiₓM, wherein 0 < x < 3, 0 < x < z < 5, and M represents one or more of the matrix elements in the electrode material; optionally, a thickness of the (B-2)^{th} lithiation sublayer is 1 nm to 30 µm, and a thickness of the (B-1)^{th} lithiation sublayer is 10 nm to 30 µm; or, along a direction from a surface to an interior of the prelithiated electrode material, the third lithiation layer comprises a (C-2)^{th} lithiation sublayer and a (C-1)^{th} lithiation sublayer, the (C-2)^{th} lithiation sublayer is made of a material containing Li_{z}M, and the (C-1)^{th} lithiation sublayer is made of a material containing Li_{y}M, wherein 0 < y < 5, 0 < y < z < 5, and M represents one or more of the matrix elements in the electrode material; optionally, a thickness of the (C-2)^{th} lithiation sublayer is 1 nm to 30 µm, and a thickness of the (C-1)^{th} lithiation sublayer is 10 nm to 30 µm; or
(3-3) along a direction from a surface to an interior of the prelithiated electrode material, the third lithiation layer comprises a (D-3)^{th} lithiation sublayer, a (D-2)^{th} lithiation sublayer, and a (D-1)^{th} lithiation sublayer; the (D-3)^{th} lithiation sublayer is made of a material containing Li_{z}M, the (D-2)^{th} lithiation sublayer is made of a material containing Li_{y}M, the (D-1)^{th} lithiation sublayer is made of a material containing LiₓM, wherein 0 < x < 3, 0 < y < 5, 0 < x < y < z < 5, and M represents one or more of the matrix elements in the electrode material; and optionally, a thickness of the (D-3)^{th} lithiation sublayer is 1 nm to 30 µm, a thickness of the (D-2)^{th} lithiation sublayer is 1 nm to 30 µm, and a thickness of the (D-1)^{th} lithiation sublayer is 10 nm to 30 µm.

13. The method for preparing a prelithiated electrode material according to any one of claims 8, 10, or 12, **characterized in that** M comprises one or more of carbon, silicon, phosphorus, tin, magnesium, silver, zinc, sulfur, or germanium.

14. The method for preparing a prelithiated electrode material according to any one of claims 6 to 13, **characterized in that** the electrode material comprises one or more of elemental sulfur, elemental silicon, silicon suboxide, elemental phosphorus, elemental tin, tin suboxide, elemental magnesium, elemental silver, elemental zinc, elemental germanium, germanium suboxide, graphite, graphene, hard carbon, soft carbon, carbon nanotubes, or carbon nanofibers.

15. The method for preparing a prelithiated electrode material according to any one of claims 6 to 14, **characterized in that** a particle diameter of the electrode material is 20 nm to 50 µm, and optionally, the particle diameter of the electrode material is 5 µm to 50 µm.

16. The method for preparing a prelithiated electrode material according to any one of claims 6 to 15, **characterized in that** the preparation method is **characterized by** one or more of:
(I) in step (1), a temperature of the first reaction is room temperature, and a time of the first reaction is 0.1 h to 6 h;
(II) in step (2), a temperature of the second reaction is room temperature, and a time of the second reaction is 0.1 h to 6 h; or
(III) in step (1), a temperature of the third reaction is room temperature, and a time of the third reaction is 0.1 h to 6 h.

17. An electrode plate, **characterized in that** the electrode plate comprises a current collector and an electrode film layer disposed on at least one surface of the current collector, and a material of the electrode film layer comprises at least one of the prelithiated electrode material according to any one of claims 1 to 5 or a prelithiated electrode material prepared by the preparation method according to any one of claims 6 to 16.

18. A secondary battery, **characterized in that** the secondary battery comprises the electrode plate according to claim 17.

19. An electrical device, **characterized in that** the electrical device comprises the secondary battery according to claim 18.
